# EUROPÄISCHE PATENTSCHRIFT

(11) **EP 0 944 108 B1**
(45) Veröffentlichungstag und Bekanntmachung des Hinweises auf die Patenterteilung: **24.08.2011**
(21) Anmeldenummer: 99200719.5
(22) Anmeldetag: 10.03.1999
(51) Int. Cl.: H01J 47/02

(54) **Strahlungsmesseinrichtung mit einer Ionisationskammer**
Radiation measuring device with an ionisation chamber
Dispositif de mesure de rayonnement avec une chambre à ionisation

(30) Priorität: 17.03.1998 DE 19811556
(43) Veröffentlichungstag der Anmeldung: 22.09.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Lumma, Waldemar, Röntgenstrasse 24, 22335 Hamburg (DE)
(74) Vertreter: Damen, Daniel Martijn

(56) Entgegenhaltungen:
- EP-A- 0 562 762
- US-A- 4 403 150

## Beschreibung

Die Erfindung betrifft eine Ionisationskammer mit mehreren auf einem Träger im Abstand voneinander befindlichen und mit Zuleitungen versehenen Meßfeldelektroden, und mit wenigstens einer gegenüber und im Abstand von dem Träger angeordneten Elektrode, die unter der Einwirkung von Röntgenstrahlung Ladungsträger emittiert.

Solche lonisationskammern, die aus der EP-A 562 762 und aus der DE-PS 1 082 989 bekannt sind, dienen dazu, in einem Röntgensystem die Röntgenstrahlung einer Röntgenaufnahme nach Erreichen einer bestimmten Dosis abzuschalten. Sie befinden sich dabei zwischen einem Röntgen-Bildaufnehmer und dem zu untersuchenden Patienten, und deshalb ist es wichtig, daß die Ionisationskammer möglichst wenig Röntgenstrahlung absorbiert und daß die räumlichen Absorptionsunterschiede innerhalb der Ionisationskammer möglichst gering sind, damit die Ionisationskammer nicht abgebildet wird.

Bei der Ionisationskammer nach der EP-A 562 762 ist der Zwischenraum zwischen dem Träger und der Elektrode mit einer mehrere Millimeter dicken Schaumstoffeinlage ausgefüllt, die nur im Bereich der Meßfeldelektroden mit Fenstern versehen ist, so daß sich in dem Bereich zwischen einer Meßfeldelektrode und dem gegenüberliegenden Teil der Elektrode ein Luftvolumen befindet. Daher können nur im Bereich der Fenster Ladungsträger von der Elektrode zur Meßfeldelektrode gelangen.

Zweck der Schaumstoffeinlage ist es, zu verhindern, daß bei einer Röntgenaufnahme die Zuleitungen der Meßfeldelektroden von Ladungsträgern getroffen werden, wodurch die Messung verfälscht würde, was bei der Ionisationskammer nach der DE-PS 1 082 989 der Fall ist. - Außerdem erhöht die Schaumstoffeinlage die mechanische Stabilität der Ionisationskammer.

Auch wenn die Schaumstoffeinlage nur eine geringe Dichte hat, absorbiert sie die Röntgenstrahlung stärker als die Luft im Bereich der Meßfeldelektroden. Dieser Absorptionsunterschied kann bei weicher Röntgenstrahlung, d.h. bei niedrigen Spannungen (z.B. 40 kV) an der die Röntgenstrahlung erzeugenden Röntgenröhre, zu einer Abbildung der Ionisationskammer in der Röntgenaufnahme führen, weshalb konventionelle Bucky-Aufnahmen vielfach ohne Belichtungsautomatik bzw. ohne Ionisationskammer ausgeführt werden.

Moderne Röntgenbildwandler, die elektrisch auslesbare Sensoren enthalten ("digitale Bildaufnehmer"), können darüberhinaus wesentlich geringere Absorptionsunterschiede im Röntgenbild darstellen als die bisher benutzten Systeme mit einem Röntgenfilm in Kombination mit einer Verstärkerfolie. Die Gefahr, daß hierbei die Ionisationskammer abgebildet wird, ist dabei besonders groß.

Aufgabe der vorliegenden Erfindung ist es daher, eine Ionisationskammer der eingangs genannten Art so auszugestalten, daß einerseits ihre Abbildung in einer Röntgenaufnahme weitgehend ausgeschlossen ist und daß andererseits die Zuleitungen zu den Meßfeldelektroden, die von der Ionisationskammer gelieferten Signale nicht beeinflussen. Diese Aufgabe wird erfindungsgemäß dadurch gelöst, daß die Zuleitungen auf ihrer der Elektrode zugewandten Seite und/oder die Elektrode auf ihrer den Meßfeldelektroden zugewandten Seite mit einer elektrisch isolierenden Schicht versehen ist, deren Dicke klein ist im Vergleich zu dem Abstand zwischen dem Träger und der Elektrode.

Durch eine elektrisch isolierende Schicht auf der Elektrode zumindest im Bereich der Zuleitungen, vorzugsweise aber auf der ganzen Elektrode mit Ausnahme der den Meßfeldelektroden gegenüberliegenden Bereiche, wird verhindert, daß in der Elektrode erzeugte Ladungsträger - die den wesentlichen Anteil des Ionisationsstroms bilden - außerhalb des Bereichs der Meßfeldelektroden emittiert werden. Durch eine Schicht auf den Zuleitungen wird verhindert, daß darüberhinaus noch im Bereich der Zuleitungen - z.B. in dem darüber befindlichen Luftvolumen - erzeugte Ladungsträger auf die Zuleitungen gelangen können. Diese isolierenden Schichten lassen sich so dünn ausführen, daß sie sich im Röntgenbild praktisch nicht mehr abbilden.

Durch die Ausgestaltung nach Anspruch 2 läßt sich erreichen, daß auch die Meßfeldelektroden selbst nicht in dem Röntgenbild abgebildet werden.

Die Absorption der Röntgenstrahlung durch die räumlich homogene Elektrode führt zwar nicht zu deren Abbildung im Röntgenbild (die Ionisationskammer ist größer als der Röntgenbildaufnehmer), erhöht aber die Strahlenbelastung für den Patienten entsprechend dem von der Elektrode absorbierten Anteil der Röntgenstrahlung. Durch die im Anspruch 3 angegebene Bauweise läßt sich bei Verwendung eines geeigneten Trägers und einer dünnen Elektrodenschicht eine geringe Absorption erreichen. Dadurch, daß die Schicht ein Metall mit einer Ordnungszahl von mindestens 40 enthält, werden darin unter der Einwirkung von Röntgenstrahlung Ladungsträger emittiert - soweit nicht die Elektrode durch eine elektrisch isolierende Schicht bedeckt ist. Durch die Weiterbildung nach Anspruch 4 wird eine elektrische Abschirmung der Ionisationskammer sichergestellt, wenn die Träger aus elektrisch isolierendem Material bestehen.

Durch die Ausgestaltung nach Anspruch 5 erhält die Ionisationskammer eine hinreichende mechanische Stabilität.

Durch die Ausgestaltung nach Anspruch 6 wird die Gefahr einer Abbildung der Meßfelder im Röntgenbild noch weiter verringert

Ein Röntgensystem mit einer erfindungsgemäßen Ionisationskammer ist in Anspruch 7 angegeben.

Die Erfindung wird nachstehend anhand der Zeichnung näher erläutert. Es zeigen:
Fig. 1 ein Röntgensystem bei dem die Erfindung anwendbar ist,
Fig. 2A eine Draufsicht auf die auf einem Träger befindlichen Meßfeldelektroden und
Fig. 2B einen Querschnitt durch eine erfindungsgemäße Ionisationskammer.

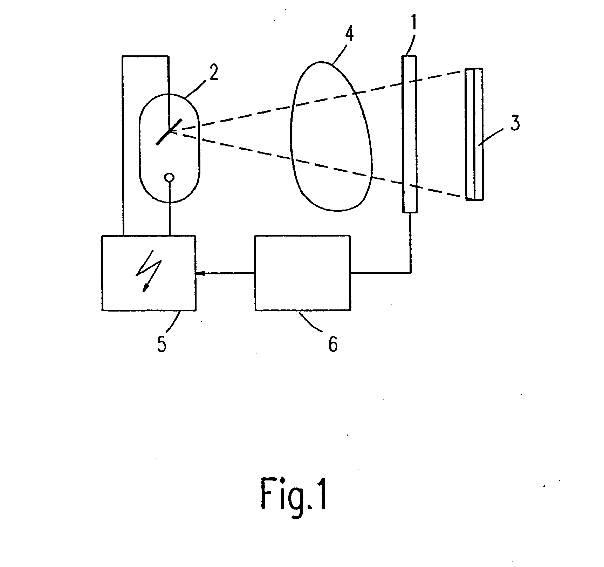

In Fig. 1 ist mit 1 eine Ionisationskammer bezeichnet, die zwischen einem Röntgenstrahler 2 und einem Röntgen-Bildaufnehmer 3 bzw. einem zu untersuchenden Patienten 4 und dem Röntgen-Bildaufnehmer 3 angeordnet ist. Die Ionisationskammer 1 ist größer als der Bildaufnehmer 3, so daß ihre Außenkonturen nicht auf dem Röntgenbildaufnehmer abgebildet werden können. Sie besitzt mehrere Meßfelder, in denen die Dosis der Röntgenstrahlung erfaßt wird und von denen eines (oder mehrere) für die Dosismessung ausgewählt werden kann.

Der Röntgenstrahler 2 wird von einem Röntgengenerator mit einem Hochspannungserzeuger 5 und einer Steuereinheit 6 gespeist. Bei einer Röntgenaufnahme fließen die durch die Röntgenstrahlung erzeugten Ionisationsströme in dem zuvor ausgewählten Meßfeld der Ionisationskammer 1 über die zugehörige Meßfeldelektrode. Diese Ionisationsströme werden von der Steuereinheit 6 integriert und führen dazu, daß bei Erreichen eines bestimmten Integralwertes, d.h. einer bestimmten Dosis in dem ausgewählten Meßfeld, die Röntgenaufnahme automatisch beendet wird.

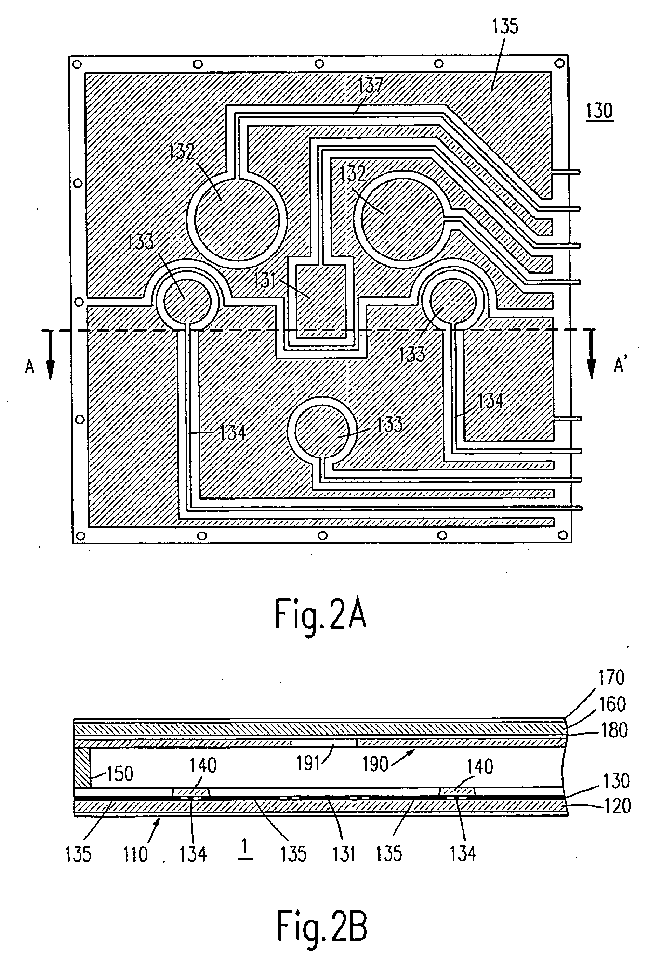

Der Aufbau der Ionisationskammern wird nachfolgend anhand der Figuren 2A und 2B beschrieben, wobei Fig. 2B den Kammeraufbau allerdings nicht maßstabsgerecht darstellt. Die Ionisationskammer ist ein flaches Gehäuse mit ebenen, quadratischen Seitenwänden, von denen die eine die Meßfeldelektroden und die andere die großflächige Elektrode trägt, die im Betriebszustand gegenüber den Meßfeldelektroden ein negatives Potential führt, so daß die in der Elektrode durch die Röntgenstrahlung befreiten Elektronen zu den Meßfeldelektroden gelangen können.

Wie sich aus Fig. 2B ergibt, umfaßt die untere Wand des Ionisationskammergehäuses einen Träger 120 aus isolierendem Material, beispielsweise eine 1 bis 2 mm dicke Plexiglasplatte. Auf seiner Außenseite ist der Träger 120 mit einer dünnen, leitenden Schicht 110 z.B. aus Graphit versehen, die durch Aufbringen eines Leitlacks im Siebdruckverfahren mit einer Dicke von z.B. 0,01 mm hergestellt werden kann. Sie schirmt die Ionisationskammer elektrisch nach außen hin ab.

Auf der Innenseite des Trägers 120 sind in einer Schicht 130 die Meßfeldelektroden aufgebracht. Wie aus Fig. 2A ersichtlich, die die Schicht 130 darstellt, gibt es ein zentrales Meßfeld mit einer Meßfeldelektrode 131, zwei oberhalb der horizontalen Mittellinie und symmetrisch zur vertikalen Mittellinie angeordnete Meßfelder (beispielsweise für Lungenaufnahmen) mit Meßfeldelektroden 132 und drei kleinere, bezüglich des Mittelpunktes um 90° gegeneinander versetzte Meßfelder (beispielsweise für Extremitätenaufnahmen) mit je einer Meßfeldelektrode 133. Jede Meßfeldelektrode ist über eine auf dem Träger befindliche Zuleitung 134 mit je einer in der Steuereinheit vorhandenen Integratorschaltung mit hochohmigem Eingang verbunden, die die zu den Meßfeldelektroden fließenden Ionisationsströme integriert. Die etwa 3 mm breiten Zuleitungen und die Meßfeldelektroden 131....133 und werden von einer geerdeten Ableitelektrode 135 im Abstand von ca. 6 mm umschlossen. Die aus den Komponenten 131...135 bestehende, elektrisch leitende Schicht 130 ist - ähnlich wie die Schicht 110 - eine ca. 0,01 mm dicke Schicht, die durch Aufbringen einer Graphit enthaltenden Leitlackschicht im Siebdruckverfahren hergestellt wird. Die Sichtlinien A-A' in Fig. 2A definieren die Ebene, deren Querschnitt in Fig. 2B dargestellt ist.

Auf die Schicht 130 ist im Bereich der Zuleitungen 134 eine isolierende Schicht 140 aufgebracht, die die Zuleitungen und die Zwischenräume zur geerdeten Ableitelektrode 135 überdeckt. Die Schicht wird durch Aufbringen eines Isolierlacks mit einer hohen Transparenz (bzw. niedriger Absorption) für Röntgenstrahlung hergestellt. Sie hat eine Dicke von 5-6 µm. Die Schicht kann auch ausgedehnter sein; wichtig ist aber, daß sie nicht die Meßfeldelektroden bedeckt.

Die zweite Kammerwand enthält einen Träger 160 aus dem gleichen Material und mit der gleichen Dicke wie der Träger 120. Auf seiner Außenseite ist dieser Träger mit einer leitenden Schicht 170 versehen, die die gleiche Funktion hat, wie die Schicht 110 und auf gleiche Weise hergestellt wird wie diese. Auf der Innenseite des Trägers ist eine örtlich homogene elektrisch leitende Schicht 180 aufgebracht, die ein Metall mit einer Ordnungszahl von mindestens 40 enthält, z.B. Silber oder Blei. Die Schicht 180 kann durch Bedrucken des Trägers z.B. mit einer Silberemulsion des Typs "Electrodog 1415 M" der Firma Acheson, 89160 Dornstadt DE, hergestellt werden. Die Schicht 180 hat eine Dicke von 5-6 µm, die ausreicht, um unter der Einwirkung von Röntgenstrahlen eine hinreichende Anzahl von freien Elektronen zu erzeugen, die aber dünn genug ist, um die Röntgenstrahlung insgesamt nur geringfügig zu schwächen.

Auf dieser Elektrodenschicht 180 ist - auf die gleiche Weise und aus dem gleichen Material, wie die Schicht 140 - eine isolierende Schicht 190 aufgedruckt, die in dem Meßfeldelektroden gegenüberliegenden Bereich mit Öffnungen 191 versehen ist, durch die hindurch die in diesem Bereich in der Elektrode erzeugten Ladungsträger austreten und - nach Ladungsträgervervielfachung im Luftzwischenraum - die gegenüberliegende Meßfeldelektrode erreichen können. Diese Öffnungen können die gleichen Abmessungen haben wie die gegnüber befindlichen Meßfeldelektroden - oder geringfügig davon abweichende, z.B. geringere Abmessungen.

Durch die isolierenden Schichten 190 bzw. 140 wird wirksam verhindert, daß Ladungsträger im Bereich der Zuleitungen aus der Elektrode 180 emittiert bzw. auf die Zuleitungen 134 treffen können. Diese isolierenden Schichten haben eine so hohe Transparenz für die Röntgenstrahlung, daß eine Abbildung des durch die Schichten gegebenen Musters im Röntgenbild praktisch ausgeschlossen ist. Ein weiterer Vorteil der erfindungsgemäßen Meßkammer ist die Einfachheit ihrer Herstellung (mehrfaches Bedrucken von Trägern mit leitenden bzw. isolierenden Schichten), wodurch sich die Herstellung einer derartigen Ionisationskammer erheblich verbilligt.

Wenn man eine der isolierenden Schichten weglassen würde, könnte man auch noch eine brauchbare Ionisationskammer erhalten. Jedoch erhält man mit den beiden Schichten bessere Ergebnisse, weil sie einerseits die Emission von Ladungsträgern aus der Elektrode 180 und andererseits das Auftreffen von Ladungsträgern auf die Zuleitungen verhindern.

Im vorliegenden Ausführungsbeispiel wurde eine Ionisationskammer dargestellt, wobei lediglich eine Elektrode vorhanden ist und wobei der Träger für die Meßfeldelektroden eine der Seitenwände für die Ionisationskammer bildet. Es ist aber auch möglich, ähnlich wie bei der Ionisationskammer nach der DE-OS 1 082 989 eine Ionisationskammer mit zwei beiderseits der Hilfselektrode angebrachten Elektroden vorzusehen, die zusammen mit den Trägern, auf denen sie aufgebracht sind, die Seitenwände der Kammer bilden. Die Meßfeldelektroden müssen dabei beiderseits eines dünnen Trägers aufgebracht sein, der sich in der Mitte zwischen den beiden Elektroden befindet.

## Patentansprüche

1. Ionisationskammer, mit mehreren auf einem Träger (120) im Abstand voneinander befindlichen und mit Zuleitungen (134) versehenen Meßfeldelektroden (131....133), und mit wenigstens einer gegenüber und im Abstand von dem Träger angeordneten Elektrode (180), die unter der Einwirkung von Röntgenstrahlung Ladungsträger emittiert,
**dadurch gekennzeichnet, daß** die Zuleitungen (134) auf ihrer der Elektrode zugewandten Seite und/oder die Elektrode (180) auf ihrer den Meßfeldelektroden (131....133) zugewandten Seite mit einer elektrisch isolierenden Schicht (140; 190) versehen ist, deren Dicke klein ist im Vergleich zu dem Abstand zwischen dem Träger (120) und der Elektrode (180).

2. Ionisationskammer, nach Anspruch 1,
**dadurch gekennzeichnet, daß** die Meßfeldelektroden (131....133) eine auf den Träger aufgebrachte, vorzugsweise Graphit enthaltende Leitlackschicht umfassen.

3. Ionisationskammer, nach Anspruch 1,
**dadurch gekennzeichnet, daß** die Elektrode eine auf einen weiteren Träger aufgebrachte homogene Schicht (180) umfaßt, die ein Metall mit einer Ordnungszahl von mindestens 40 enthält.

4. Ionisationskammer, nach Anspruch 3,
**dadurch gekennzeichnet, daß** die Träger (120, 160) auf ihrer Außenseite mit einer leitenden und vorzugsweise Graphit enthaltenden Schicht (110, 170) versehen ist.

5. Ionisationskammer, nach Anspruch 3,
**dadurch gekennzeichnet, daß** die Träger über Rahmen (150) miteinander verbunden sind.

6. Ionisationskammer, nach Anspruch 1 mit einer isolierenden Schicht (190) auf der Elektrode (180),
**dadurch gekennzeichnet, daß** die Schicht in den Bereichen, die einer Meßfeldelektrode gegenüberliegen, mit Öffnungen versehen ist, deren Abmessungen von denen der Meßfeldelektrode abweichen.

7. Röntgen-System mit einem Röntgenbildaufnehmer (3), einer Röntgenröhre (2) und einem Röntgengenerator (5,6) zur Speisung der Röntgenröhre (2), der mit einer Belichtungsautomatik zum Beenden einer Röntgenaufnahme nach Erreichen einer vorgebbaren Dosis versehen ist, die zum Messen der Dosis eine Ionisationskammer (1) nach Anspruch 1 aufweist

## Claims

1. Ionization chamber, with several measuring field electrodes (131 ... 133) placed on a support (120), spaced from each other, and provided with supply lines (134), and at least one electrode (180) placed opposite and spaced from the support (120), which electrode emits charge carriers due to the action of x-rays,
**characterized in that** the supply lines (134) on their electrode-facing sides, and/or the electrode (180) on its side facing the measuring field electrode (131 ... 133), are provided with an electrically insulating layer (140, 190) whose thickness is small compared to the distance between the support (120) and the electrode (180).

2. Ionization chamber, according to claim 1,
**characterized in that** the measuring field electrodes (131 ... 133) preferably comprise a graphite-containing conductive lacquer layer placed on the support.

3. Ionization chamber, according to claim 1,
**characterized in that** the electrode comprises a homogeneous layer (180) placed on another support, which layer contains a metal with an atomic number of at least 40.

4. Ionization chamber, according to claim 3,
**characterized in that** the support (120, 160) is provided with a conductive and preferably graphite-containing layer (110, 170) on its outer side.

5. Ionization chamber, according to claim 3,
**characterized in that** the supports are interconnected via a framework (150).

6. Ionization chamber, according to claim 1, with an insulating layer (190) on the electrode (180),
**characterized in that** the layer in the regions which lie opposite a measuring field electrode is provided with openings whose dimensions differ from those of measuring field electrode.

7. X-ray system with an x-ray image detection device (3), an x-ray tube (2) and an x-ray generator (5, 6) for supplying the x-ray tube (2), which is equipped with an automatic exposure control to terminate a radiograph after reaching a predetermined dose, which is provided with an ionization chamber (1) according to claim 1 for measuring the dose.

## Revendications

1. Chambre à ionisation, avec plusieurs électrodes de champ de mesure (131 ... 133) disposées à distance les unes des autres sur un support (120) et dotées de conduites d'amenée (134), et avec au moins une électrode (180) agencée en face et à distance du support laquelle émet des porteurs de charge sous l'influence des rayons X,
**caractérisée en ce que** les conduites d'amenée (134) sur leur côté tourné vers l'électrode et/ou l'électrode (180) sur son côté tourné vers les électrodes de champ de mesure (131 ... 133) sont dotées d'une couche électriquement isolante (140 ; 190) dont l'épaisseur est petite par rapport à la distance entre le support (120) et l'électrode (180).

2. Chambre à ionisation, selon la revendication 1,
**caractérisée en ce que** les électrodes de champ de mesure (131 ... 133) comportent une couche de peinture conductrice appliquée sur le support et contenant de préférence du graphite.

3. Chambre à ionisation selon la revendication 1,
**caractérisée en ce que** l'électrode comporte une couche (180) homogène appliquée sur un autre support et contenant un métal ayant un numéro atomique d'au moins 40.

4. Chambre à ionisation selon la revendication 3,
**caractérisée en ce que** les supports (120, 160) sont dotés sur leur côté extérieur d'une couche (110, 170) conductrice et contenant de préférence du graphite.

5. Chambre à ionisation selon la revendication 3,
**caractérisée en ce que** les supports sont reliés les uns aux autres par le biais de cadres (150).

6. Chambre à ionisation selon la revendication 1 avec une couche isolante (190) sur l'électrode (180),
**caractérisée en ce que** la couche est dotée, dans les zones faisant face à une électrode de champ de mesure, d'ouvertures dont les dimensions divergent de celles de l'électrode de champ de mesure.

7. Système à rayons X avec un capteur d'images radiographiques (3), un tube à rayons X (2) et un générateur de rayons X (5, 6) servant à alimenter le tube à rayons X (2) et doté d'un dispositif d'exposition automatique pour terminer une radiographie lorsqu'une dose prédéfinissable est atteinte, qui présente une chambre à ionisation (1) selon la revendication 1 pour mesurer la dose.
